# EUROPÄISCHE PATENTSCHRIFT

(11) **EP 2 574 592 B1**
(45) Veröffentlichungstag und Bekanntmachung des Hinweises auf die Patenterteilung: **12.02.2014**
(21) Anmeldenummer: 11007873.0
(22) Anmeldetag: 28.09.2011
(51) Int. Cl.: B67D 1/08, B23P 6/00, B65D 39/08

(54) **Verfahren und Vorrichtung zum Umrüsten eines Fluidbehälters mit Anschlussmuffe**
Device and method for retrofitting a fluid container with coupling bush
Procédé et dispositif de rééquipement d'un récipient à fluide doté d'un manchon de raccordement

(43) Veröffentlichungstag der Anmeldung: 03.04.2013
(73) Patentinhaber: Franke Technology and Trademark Ltd, 6052 Hergiswil (CH)
(72) Erfinder: Szczepanski, Wlodimierz, 57223 Kreuztal (DE)
(74) Vertreter: Lemcke, Brommer & Partner

(56) Entgegenhaltungen:
- EP-A2- 1 077 104
- WO-A1-2011/076204
- GB-A- 2 177 326

## Beschreibung

Die vorliegende Erfindung betrifft ein Verfahren zum Umrüsten eines Fluidbehälters mit Anschlussmuffe, vorzugsweise eines Getränkebehälters höchst vorzugsweise eines Kegs.

Weiterhin betrifft die vorliegende Erfindung ein Muffenkonversionsteil zum Umrüsten eines Fluidbehälters mit Anschlussmuffe, vorzugsweise eines Getränkebehälters, höchst vorzugsweise eines Kegs, sowie einen entsprechend umgerüsteten Fluidbehälter.

In der Getränkeindustrie haben sich Fluidbehälter mit Anschlussmuffe, die nach dem englischen Wort für "kleines Fass" auch als Keg bezeichnet werden, weitgehend durchgesetzt. Derartige Getränkebehälter bestehen in der Regel aus einer so genannten Kegblase, die mit dem entsprechenden Getränk befüllt wird, an welche Kegblase oben und unten zu Transport- oder Lagerzwecken so genannte Kragenringe angesetzt sind. Das Befüllen, die Reinigung sowie die Entnahme von Getränken aus dem Keg erfolgt über ein Ventil, welches zusammen mit einer entsprechenden Anschlussmuffe für anzuschließende Apparaturen auf der Oberseite der Kegblase in deren Mitte angeordnet ist.

Obwohl heutzutage Kegs mit so genannten Standardmuffen (mit Innengewinde, Gewindedurchmesser 2 Zoll, Gewindesteigung 14 TPI - turns per inch) existieren, gibt es im Markt auch Kegs mit gewindeloser Muffe oder mit bestimmten Spezialmuffen, die andere Gewindedurchmesser und/oder Gewindesteigungen aufweisen.

Die Diversität der Anschlussmuffen von auf dem Markt befindlichen Kegs stellt insbesondere für Getränkehersteller und -Abfüller sowie auch für Ausschankbetriebe ein Problem dar, da jeweils für unterschiedliche Muffentypen unterschiedliche Befüll-, Reinigungs-, Zapfköpfe oder dergleichen vorzusehen sind. Dies führt zu erhöhten Kosten aufgrund der vorzuhaltenden Ausrüstung und der komplizierteren Handhabung.

Außerdem kann es bei Verwendung von Kegs vorkommen, dass die Anschlussmuffe bzw. das Muffengewinde beschädigt wird, was die Verwendbarkeit des Kegs beeinträchtigen kann.

Aus WO2011/076204 ist ein Verfahren zum Umrüsten von Bierfässern bekannt, bei dem eine vorhandene Fassmuffe herausgeschnitten und durch eine Austauschmuffe ersetzt wird. Die Austauschmuffe hat einen Muffenkranz, der den erzeugten Ausschnitt überdeckt und mit der anschlussseitigen Stirnseite des Bierfasses verschweißt wird.

Ein anderes Verfahren zum Umrüsten von Fässern ist in GB2177326 beschrieben. Auch hier wird eine vorhandene Fassmuffe vollständig herausgetrennt und ein neues Muffenteil eingeschweißt.

Der Erfindung liegt die Aufgabe zugrunde, zu einer Standardisierung des Kegpools beizutragen, dabei zugleich die vorstehend genannten Kosten zu reduzieren und die Handhabung zu vereinfachen. Außerdem wird eine Werterhöhung für beschädigte Kegs oder Gebrauchtkegs mit Sondermuffen angestrebt, welche sich ansonsten aufgrund fehlender Anschlussmöglichkeiten nur noch eingeschränkt verwenden lassen.

Die Erfindung löst diese Aufgabe mittels eines Verfahrens mit den Merkmalen des Patentanspruchs 1, mittels eines Muffenkonversionsteils mit den Merkmalen des Patentanspruchs 9 sowie mittels eines Fluidbehälters mit den Merkmalen des Patentanspruchs 12.

Vorteilhafte Weiterbildungen der vorstehend genannten Erfindungsaspekte sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß beinhaltet ein Verfahren zum Umrüsten eines Fluidbehälters mit Anschlussmuffe, vorzugsweise eines Getränkebehälters, höchst vorzugsweise eines Kegs, die folgenden Verfahrensschritte:
a) teilweises Entfernen einer an dem Fluidbehälter vorhandenen Anschlussmuffe, so dass ein Muffenrest erhalten bleibt;
b) Anbringen eines Muffenkonversionsteils an dem Muffenrest;
c) stoffschlüssiges Verbinden von Muffenkonversionsteil und Muffenrest.

Ein erfindungsgemäßes Muffenkonversionsteil zum Umrüsten eines Fluidbehälters mit Anschlussmuffe, vorzugsweise eines Getränkebehälters, höchst vorzugsweise eines Kegs, zeichnet sich dadurch aus, dass das Muffenkonversionsteil nach Art eines Ringteils mit Innengewinde, vorzugsweise mit einer Steigung von 14 TPI, ausgebildet und dazu vorgesehen ist, mit einem nach dem erfindungsgemäßen Verfahren erzeugten Muffenrest des Fluidbehälters so zusammenzuwirken, dass es mit diesem stoffschlüssig verbindbar ist.

Ein erfindungsgemäßer Fluidbehälter mit Anschlussmuffe, vorzugsweise Getränkebehälter, höchst vorzugsweise Keg, ist dadurch gekennzeichnet, dass im Bereich der Anschlussmuffe ein erfindungsgemäßes Muffenkonversionsteil vorgesehen ist, welches mit einem nach dem erfindungsgemäßen Verfahren erzeugten Muffenrest des Fluidbehälters stoffschlüssig verbunden wurde.

Im Zuge des erfindungsgemäßen Verfahrens ist demnach vorgesehen, dass zum Umrüsten des Kegs auf eine Standardmuffe zunächst die an dem Fluidbehälter vorhandene Anschlussmuffe zumindest teilweise entfernt wird, so dass ein Muffenrest erhalten bleibt.

In diesem Zusammenhang kann einerseits vorgesehen sein, dass die vorhandene Muffe in ihrem Innenkonturbereich erweitert wird, vorzugsweise durch Aufbohren oder Ausfräsen, höchst vorzugsweise zylindrisch. Anschließend kann ein Muffenkonversionsteil im erweiterten Innenkonturbereich der Muffe eingesetzt werden.

Eine alternative Ausgestaltung des erfindungsgemäßen Verfahrens sieht jedoch vor, dass die vorhandene Muffe quer zur ihrer Längserstreckung abgetrennt wird, vorzugsweise abgeschnitten. Anschließend kann dann ein entsprechendes Muffenkonversionsteil auf den verbleibenden Stumpf der Muffe aufgesetzt werden.

Die vorliegende Erfindung ist jedoch keinesfalls auf ein bestimmtes Verfahren zum teilweisen Entfernen der an dem Fluidbehälter vorhandenen Anschlussmuffe beschränkt, so dass in diesem Zusammenhang grundsätzlich insbesondere jedes geeignete spanende Verfahren angewendet werden kann.

Das ein- oder aufgesetzte Muffenkonversionsteil weist vorzugsweise ein Muffeninnengewinde auf, welches höchst vorzugsweise eine Steigung von 14 TPI besitzt.

Wenn die vorhandene Muffe in ihrem Innenkonturbereich insbesondere durch Aufbohren oder durch Ausfräsen erweitert wird, kann unter entsprechender Weiterbildung des erfindungsgemäßen Verfahrens vorgesehen sein, dass dann das Muffenkonversionsteil in den erweiterten Innenkonturbereich der Muffe eingesetzt wird.

In diesem Zusammenhang kann das Muffenkonversionsteil als Ringteil ausgebildet sein, welches vorzugsweise eine glattzylindrische äußere Mantelfläche aufweist, so dass es im Wesentlichen passgenau in den komplementär erweiterten Innenkonturbereich der Muffe einsetzbar ist.

Zum stoffschlüssigen Verbinden von Muffenrest und Muffenkonversionsteil kann im Zuge einer anderen Weiterbildung des erfindungsgemäßen Verfahrens vorgesehen sein, dass im Kontaktbereich von eingesetztem Muffenkonversionsteil und Muffenrest eine Schweißnaht angebracht wird, welche vorzugsweise umlaufend ausgebildet ist und welche höchst vorzugsweise von außen im Öffnungsbereich der Muffe angebracht wird.

Im Zuge der bereits angesprochenen Abtrennung der vorhandenen Muffe quer zu ihrer Längserstreckung kann entsprechend vorgesehen sein, dass zur stoffschlüssigen Verbindung eine Schweißnaht im Kontaktbereich von aufgesetztem Muffenkonversionsteil und Muffenrest angebracht wird, wobei auch hier die Schweißnaht vorzugsweise umlaufend ausgebildet ist und höchst vorzugsweise im Seitenwandbereich der Muffe angebracht wird.

Während des teilweisen Entfernens der an dem Fluidbehälter vorhandenen Anschlussmuffe kann im Zuge einer wieder anderen Weiterbildung des erfindungsgemäßen Verfahrens vorgesehen sein, dass der Fluidbehälter an der Muffe von außen gehalten wird, vorzugsweise durch Einspannen, um ein prozesssicheres Entfernen der Muffe zu gewährleisten.

Im Zuge der wiederholt angesprochenen Abtrennung der vorhandenen Muffe quer zu ihrer Längserstreckung kann im Zuge einer Weiterbildung des erfindungsgemäßen Muffenkonversionsteils vorgesehen sein, dass dieses seinerseits als Muffenteil ausgebildet ist, welches an einer seiner Stirnseiten derart ausgebildet ist, dass es im Wesentlichen passgenau auf den verbleibenden Stumpf der Muffe aufsetzbar ist. An seiner anderen Stirnseite kann ein solches Muffenkonversionsteil einen umlaufenden Außenwulst aufweisen, welcher auch bei vorhandenen Keg-Anschlussmuffen typischerweise vorhanden ist.

Eine Weiterbildung des erfindungsgemäßen Fluidbehälters zeichnet sich dadurch aus, dass die in Richtung der Längserstreckung der Muffe bestimmte Höhe des Konversionsteils einer Tiefe des erweiterten Innenkonturbereichs der Muffe gerade entspricht. Auf diese Weise schließen das Muffenkonversionsteil und der Muffenrest an der Muffenoberseite im Wesentlichen bündig ab, nachdem das Muffenkonversionsteil in den erweiterten Innenkonturbereich der Muffe eingesetzt wurde. Dies ermöglicht einerseits eine sichere stoffschlüssige Verbindung von Muffenkonversionsteil und Muffenrest im oberen Bereich der Anschlussmuffe und stellt andererseits sicher, dass ein entsprechend umgerüsteter Fluidbehälter anschließend ohne Weiteres wie gewohnt mit vorhandenen Befüll-, Reinigungs- oder Zapfeinrichtungen wiederverwendbar ist.

Entsprechend ist im Zuge einer anderen Weiterbildung des erfindungsgemäßen Fluidbehälters vorgesehen, dass die in Richtung der Längserstreckung der Muffe bestimmte Höhe des Muffenkonversionsteils gerade der Länge oder Höhe des quer zur Längserstreckung der ursprünglichen Muffe abgetrennten Muffenabschnitts entspricht. Auf diese Weise ist sichergestellt, dass die neue Muffe bzw. der überholte Fluidbehälter noch dieselbe Gesamthöhe aufweist wie vor der Umrüstung, um so eine problemlose Wiederverwendung zu ermöglichen.

Weitere Eigenschaften und Vorteile der vorliegenden Erfindung ergeben sich aus der nachfolgenden Beschreibung von Ausführungsbeispielen anhand der Zeichnung.
- Figur 1: zeigt exemplarisch einen Fluidbehälter in Form eines Getränkebehälters (Keg);
- Figur 2: zeigt im Querschnitt die Anschlussmuffe eines Fluidbehälters gemäß Figur 1 nach deren teilweiser Entfernung;
- Figur 3: zeigt im Querschnitt eine alternative Anschlussmuffe eines Fluidbehälters nach deren teilweiser Entfernung;
- Figur 4: zeigt ein erfindungsgemäßes Muffenkonversionsteil;
- Figur 5: zeigt einen Detailausschnitt bei Bezugszeichen X in Figur 5; und
- Figur 6: zeigt eine mögliche Ausgestaltung der im Rahmen der vorliegenden Erfindung vorgesehenen Anbringung des Muffenkonversionsteils insbesondere gemäß Figur 4 an dem Muffenrest gemäß Figur 2.

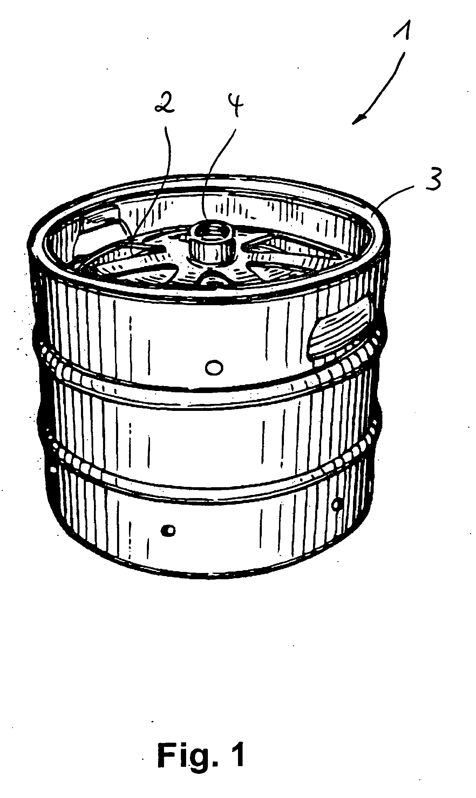

Die Figur 1 zeigt ein Getränke-Mehrwegfass in Form eines Kegs, welches in seiner Gesamtheit mit dem Bezugszeichen 1 bezeichnet ist. Derartige Fluidbehälter wurden speziell zum industriellen Befüllen und zur keimfreien Lagerung von Getränken entwickelt und haben sich heute in der Gastronomie weitgehend durchgesetzt.

Das Keg 1 umfasst den eigentlichen Flüssigkeitsbehälter in Form der so genannten Kegblase 2, welche in der Regel aus Lagerungs-, Transport- und Stabilitätsgründen mit so genannten Kragenringen 3 versehen ist, von denen in Figur 1 nur einer explizit bezeichnet ist. Insbesondere zum Entnehmen von Flüssigkeit aus dem Keg 1 ist auf dessen Oberseite in der Mitte ein Ventil (nicht gezeigt) vorgesehen, welches innerhalb einer Anschlussmuffe 4 angeordnet ist. Im Bereich der Anschlussmuffe kann beispielsweise ein passender Zapfkopf angebracht werden, um Flüssigkeit aus dem Keg 1 zu entnehmen.

Je nach Ausbildung des Ventils bzw. der Anschlussmuffe 4 können verschiedene Zapfköpfe zum Einsatz kommen. Insbesondere existieren in diesem Zusammenhang innenseitig glatte Anschlussmuffen 4 und Anschlussmuffen 4 mit Innengewinde, wobei in letzterem Fall der Zapfkopf auf das Keg 1 aufgeschraubt bzw. in die Anschlussmuffe 4 eingeschraubt wird. Als Standard-Anschlussmuffe gilt heutzutage eine Anschlussmuffe 4 mit 14 TPI (turns per inch)-Innengewinde und mit einem Anschlussdurchmesser von 2 Zoll. Es existieren jedoch herstellerbedingt auch Kegs mit glatter, gewindeloser Anschlussmuffe 4 oder (gebrauchte) Kegs mit Sondermuffen, welche entsprechend einen anderen Anschlussdurchmesser und/oder eine andere Gewindesteigung aufweisen können.

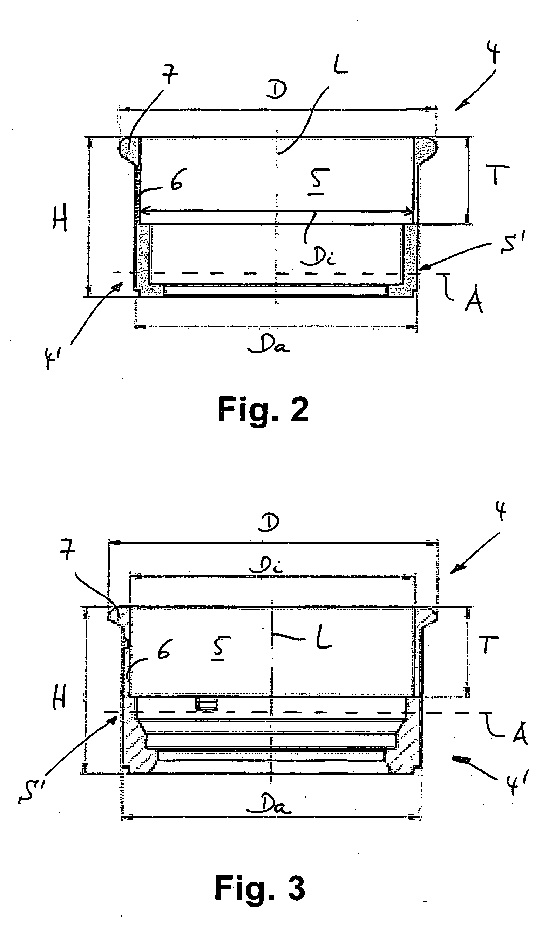

Figur 2 zeigt im Querschnitt die Anschlussmuffe 4 eines Kegs, insbesondere des Kegs 1 gemäß Figur 1. Die Anschlussmuffe 4 gemäß Figur 2 ist als gewindelose Muffe ausgebildet, wie im unteren Teil der Figur 2 zu erkennen ist. Um nun eine solche Anschlussmuffe 4 zu einer Standardmuffe umzurüsten, sieht die vorliegende Erfindung vor, dass die vorhandene Anschlussmuffe 4 zumindest teilweise entfernt wird, so dass ein Muffenrest 4' erhalten bleibt. Gemäß Figur 2 erfolgt dies insbesondere dadurch, dass im oberen Bereich der Anschlussmuffe 4 bis zu einer Tiefe T, welche vorliegend etwa der halben Muffenhöhe H entspricht, die Muffe 4 aufgebohrt oder ausgefräst wird, so dass ein erweiterter Innenkonturbereich 5 resultiert, der seitlich nur noch von einem schmalen Restwandbereich 6 der Muffe 4 begrenzt wird. Im oberen Randbereich der Muffe verbleibt seitlich ein umlaufender Wulst 7, dessen Außendurchmesser dem maximalen Durchmesser D der Muffe 4 definiert. Das Aufbohren bzw. Ausfräsen der Muffe im Innenkonturbereich 5 erfolgt symmetrisch zur Muffenlängsachse L. Der minimale Außendurchmesser der Muffe im erweiterten Innenkonturbereich 5 ist mit Da bezeichnet, während das Bezugszeichen Di den (konstanten) Innendurchmesser der Muffe 4 im zylindrisch erweiterten Innenkonturbereich 5 angibt.

Figur 3 zeigt im Querschnitt eine etwas andere Ausgestaltung der Muffe 4, bei der wiederum bereits bis zu einer Tiefe T ein Aufbohren oder Ausfräsen symmetrisch zur Längsachse L stattgefunden hat, um einen erweiterten Innenkonturbereich 5 zu schaffen.

Das angesprochene Aufbohren oder Ausfräsen der Muffe 4 zur Schaffung des erweiterten Innenkonturbereichs 5 erfolgt derart, dass das Keg 1 gemäß Figur 1 von außen an der Muffe 4 prozesssicher gehalten, vorzugsweise eingespannt wird, was in den Figuren nicht dargestellt ist.

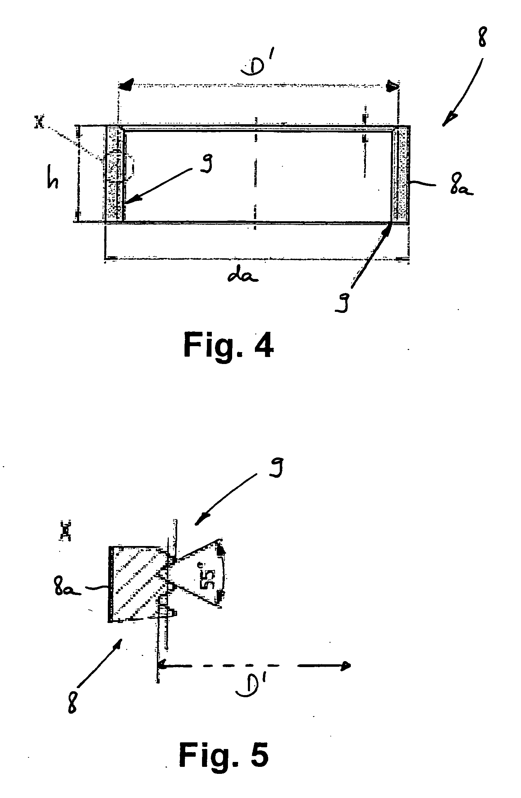

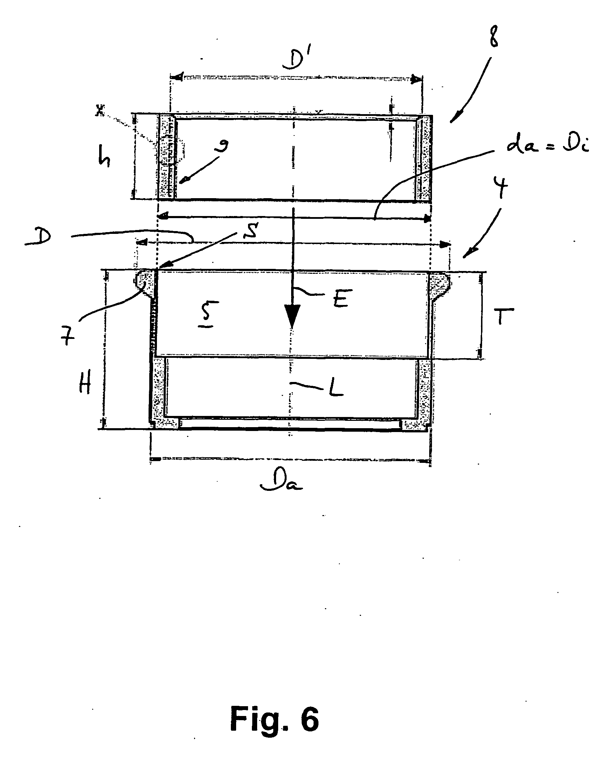

In den erweiterten Innenkonturbereich 5 gemäß Figur 2 oder Figur 3 wird anschließend das Muffenkonversionsteil 8 gemäß beispielsweise Figur 4 eingesetzt, welches nach Art einer Einschweißhülse ausgebildet ist. Es ist nach Art eines Ringteils ausgeführt, welches eine Höhe h aufweist, die im Wesentlichen genau der Tiefe T des erweiterten Innenkonturbereichs 5 entspricht (vgl. Figuren 2 und 3). Der Außendurchmesser da des Muffenkonversionsteils 4 entspricht passgenau dem Innendurchmesser Di des erweiterten Innenkonturbereichs 5, so dass das Muffenkonversionsteil 8 in den erweiterten Innenkonturbereich 5 der Anschlussmuffe 4 bzw. des Muffenrests einsetzbar bzw. einpressbar ist. Dies ist in Figur 6 dargestellt, wobei der Pfeil E das beschriebene Einpressen bzw. Einsetzen des Muffenkonversionsteils 8 in den erweiterten Innenkonturbereich 5 der Muffe 4 bzw. des verbleibenden Muffenrests 4' symbolisiert. Nach erfolgtem Einsetzen E des Muffenkonversionsteils 8 in den erweiterten Innenkonturbereich 5 der Muffe 4 schließen die Muffe 4 bzw. der Muffenrest und das Muffenkonversionsteil 8 an ihrer Oberseite bündig ab. Dort erfolgt abschließend etwa bei Bezugszeichen S eine stoffschlüssige Verbindung von Muffenkonversionsteil 8 und Muffe 4 bzw. Muffenrest nach Art einer ringförmig umlaufenden Schweißnaht.

Wie der Figur 4 weiterhin noch zu entnehmen ist, weist das Muffenkonversionsteil 8 ein Innengewinde 9 auf, vorzugsweise ein Innengewinde 9 mit einer Steigung von 14 TPI (turns per inch). Der wirksame Gewindedurchmesser D' gemäß Figur 4 beträgt für eine Standardmuffe vorzugsweise 2 Zoll, ohne dass die Erfindung jedoch auf die vorstehend genannten Maßangaben beschränkt wäre.

Figur 5 zeigt noch eine Detaildarstellung bei Bezugszeichen X in Figur 4. Entsprechend beträgt der Winkel zwischen den begrenzenden Flanken eines Gewindegangs bei einem Standard-Muffenkonversionsteil 8 exemplarisch dargestellte 55°, ohne dass die Erfindung auf einen solchen Wert beschränkt wäre.

Die äußere Mantelfläche des Muffenkonversionsteils 8 ist gemäß der Darstellung in den Figuren 4 und 5 glattzylindrisch ausgebildet und entspricht so der ebenfalls glattzylindrischen Ausgestaltung des erweiterten Innenkonturbereichs 5 (vgl. Figuren 2, 3 und 6). Allerdings ist die Erfindung nicht auf eine derartige Ausgestaltung beschränkt, so dass es grundsätzlich beispielsweise auch im Rahmen der vorliegenden Erfindung liegt, den erweiterten Innenkonturbereich 5 mit in Abhängigkeit von der Tiefe abnehmendem Querschnitt auszubilden, wobei das Muffenkonversionsteil eine entsprechend komplementäre, kegelstumpfartige Ausgestaltung an seiner äußeren Mantelfläche annimmt.

Es liegt weiterhin im Rahmen der vorliegenden Erfindung, die Anschlussmuffe 4 gemäß den Figuren 1 bis 3 im Zuge ihrer teilweisen Entfernung quer zu ihrer Längserstreckung, das heißt quer zur Längsachse L abzutrennen, vorzugsweise abzuschneiden, so dass nur ein Muffenstumpf an dem Keg 1 gemäß Figur 1 verbleibt. Dies ist in den Figuren 2 und 3 mittels einer gestrichelten Linie A jeweils schematisch angedeutet, wobei die Lage der Trenn-/Schnittlinie A bezogen auf die Höhe H der Muffe 4 im Wesentlichen frei wählbar ist. Nach erfolgter Trennung verbleibt unterhalb der Schnittlinie A der bereits erwähnte Muffenrest oder Muffenstumpf 4', auf den anschließend von oben ein nicht explizit gezeigtes Muffenkonversionsteil aufgesetzt wird, welches die gewünschten geometrischen Abmessungen der Anschlussmuffe nach erfolgter Ummusterung aufweist. Hierzu zählt insbesondere das in den Figuren 4 und 6 dargestellte Innengewinde 9 mit der entsprechenden Steigung (vgl. Figur 5) und den weiteren gewünschten Gewindeabmessungen.

Wichtig ist in diesem Zusammenhang natürlich auch, dass der Außendurchmesser Da des an der Trennlinie A auf den Muffenstumpf 4' aufzusetzenden Muffenkonversionsteils und dessen Wandstärke den entsprechenden Parametern im Bereich des Muffenstumpfs entspricht. Die stoffschlüssige Verbindung zwischen Muffenstumpf bzw. Muffenrest 4' und dem aufgesetzten Muffenkonversionsteil erfolgt dann im Bereich der Trennlinie A durch stoffschlüssiges Verbinden mittels einer seitlich umlaufenden Schweißnaht bei Bezugszeichen S' (vgl. Figur 2 und Figur 3).

## Patentansprüche

1. Verfahren zum Umrüsten eines Fluidbehälters (1) mit Anschlussmuffe (4), vorzugsweise eines Getränkebehälters, höchst vorzugsweise Keg, beinhaltend die Schritte:
a) teilweises Entfernen einer an dem Fluidbehälter (1) vorhandenen Anschlussmuffe (4), so dass ein Muffenrest (4') erhalten bleibt;
b) Anbringen eines Muffenkonversionsteils (8) an dem Muffenrest (4');
c) stoffschlüssiges Verbinden (S, S') von Muffenkonversionsteil (8) und Muffenrest (4').

2. Verfahren nach Anspruch 1, **dadurch gekennzeichnet, dass** in Schritt a) die vorhandene Muffe (4) mittels eines spanenden Verfahrens teilweise entfernt wird.

3. Verfahren nach Anspruch 1 oder 2, **dadurch gekennzeichnet, dass** in Schritt b) ein Muffenkonversionsteil (8) mit einem Muffeninnengewinde (9), vorzugsweise mit einer Steigung von 14 TPI, an dem Muffenrest (4') angebracht wird.

4. Verfahren nach mindestens einem der Ansprüche 1 bis 3, **dadurch gekennzeichnet, dass** in Schritt a) die vorhandene Muffe (4) in ihrem Innenkonturbereich erweitert wird, vorzugsweise aufgebohrt oder ausgefräst, höchst vorzugsweise zylindrisch, und dass in Schritt b) das Muffenkonversionsteil (8) in den erweiterten Innenkonturbereich (5) der Muffe (4) eingesetzt wird.

5. Verfahren nach Anspruch 4, **dadurch gekennzeichnet, dass** in Schritt c) das stoffschlüssige Verbinden mittels einer Schweißnaht (5) im Kontaktbereich von eingesetztem Muffenkonversionsteil (8) und Muffenrest (4) erfolgt, vorzugsweise mittels einer umlaufenden Schweißnaht (5), die höchst vorzugsweise von außen im Öffnungsbereich der Muffe (4) angebracht wird.

6. Verfahren nach mindestens einem der Ansprüche 1 bis 3, **dadurch gekennzeichnet, dass** in Schritt a) die vorhandene Muffe (4) quer zu ihrer Längserstreckung (L) abgetrennt wird, vorzugsweise abgeschnitten, und dass in Schritt b) das Muffenkonversionsteil (8) auf den verbleibenden Stumpf (4') der Muffe aufgesetzt wird.

7. Verfahren nach Anspruch 6, **dadurch gekennzeichnet, dass** in Schritt c) das stoffschlüssige Verbinden mittels einer Schweißnaht (S') im Kontaktbereich von aufgesetztem Muffenkonversionsteil (8) und Muffenrest (4') erfolgt, vorzugsweise mittels einer umfaufenden Schweißnaht (S'), die höchst vorzugsweise von außen im Seitenwandbereich der Muffe (4) angebracht wird.

8. Verfahren nach mindestens einem der Ansprüche 1 bis 7, **dadurch gekennzeichnet, dass** zumindest in Schritt a) der Fluidbehälter (1) an der Muffe (4) prozesssicher gehalten wird, vorzugsweise eingespannt.

9. Muffenkonversionsteil (8) zum Umrüsten eines Fluidbehälters (1) mit Anschlussmuffe (4), vorzugsweise eines Getränkebehälters, höchst vorzugsweise Keg, welches Muffenkonversionsteil (8) nach Art eines Ringteils mit Innengewinde (9), vorzugsweise mit einer Steigung von 14 TPI, ausgebildet ist, **dadurch gekennzeichnet, dass** das Muffenkonversionsteil (8) dazu vorgesehen ist, mit einem nach dem Verfahren gemäß einem der Ansprüche 1 bis 8 erzeugten Muffenrest (4') des Fluidbehälters so zusammenzuwirken, dass es mit diesem stoffschlüssig verbindbar ist.

10. Muffenkonversionsteil (8) nach Anspruch 9, **dadurch gekennzeichnet, dass** das Ringteil an seiner äußeren Mantelfläche (8a) derart ausgebildet ist, vorzugsweise glattzylindrisch, dass es im Wesentlichen passgenau in den erweiterten Innenkonturbereich (5) der Muffe (4) gemäß Anspruch 4 einsetzbar ist.

11. Muffenkonversionsteil (8) nach Anspruch 9, **dadurch gekennzeichnet, dass** das Ringteil ein Muffenteil ist, welches an einer seiner Stirnseiten derart ausgebildet ist, dass es im Wesentlichen passgenau auf den verbleibenden Stumpf (4') der Muffe gemäß Anspruch 6 aufsetzbar ist, und welches vorzugsweise an seiner anderen Stirnseite einen umlaufenden Außenwulst (7) aufweist.

12. Fluidbehälter (1) mit Anschlussmuffe (4), vorzugsweise Getränkebehälter, höchst vorzugsweise Keg, **dadurch gekennzeichnet, dass** im Bereich der Anschlussmuffe (4) ein Muffenkonversionsteil (8) vorgesehen ist, **dadurch gekennzeichnet, dass** es sich um ein Muffenkonversionsteil (8) gemäß einem der Ansprüche 9 bis 11 handelt, welches mit einem nach dem Verfahren gemäß einem der Ansprüche 1 bis 8 erzeugten Muffenrest (4') des Fluidbehälters (1) stoffschlüssig verbunden wurde.

13. Fluidbehälter (1) nach Anspruch 12, **dadurch gekennzeichnet, dass** die in Richtung der Längserstreckung (2) der Muffe (4) bestimmte Höhe (h) des Muffenkonversionsteils (8) einer Tiefe (T) des erweiterten Innenkonturbereichs (5) der Muffe (4) gemäß Anspruch 4 entspricht.

14. Fluidbehälter (1) nach Anspruch 12, **dadurch gekennzeichnet, dass** die in Richtung der Längserstreckung (2) der Muffe (4) bestimmte Höhe des Muffenkonversionsteils der Länge des gemäß Anspruch 6 abgetrennten Muffenabschnitts entspricht.

## Claims

1. A method of retrofitting a fluid container (1) with a connecting socket (4), preferably a beverage container, most preferably a keg, including the steps of:
a) partially removing a connecting socket (4) present on the fluid container (1) so that a socket residue (4') remains;
b) applying a socket conversion member (8) to the socket residue (4');
c) forming a bonded connection (S, S) of the socket conversion member (8) and the socket residue (4').

2. A method as claimed in claim 1, **characterised in that** the socket (4) which is present is partially removed in step a) by means of a machining process.

3. A method as claimed in claim 1 or 2, **characterised in that** in step b) a socket conversion member (8) with an internal socket thread (9), preferably with a pitch of 14 TPI, is applied to the socket residue (4')

4. A method as claimed in at least one of claims 1 to 3, **characterised in that** in step a) the existing socket (4) is enlarged in its internal contour region, preferably drilled out or milled out, most preferably cylindrically, and that in step b) the socket conversion member (8) is inserted into the enlarged contour region (5) of the socket (4).

5. A method as claimed in claim 4, **characterised in that** step c) the metallurgical connection is effected by means of a weld seam (5) in the contact region of the inserted socket conversion member (8) and the socket residue (4), preferably by means of a peripheral weld seam (5), which, most preferably, is applied from the exterior in the opening region of the sleeve socket (4).

6. A method as claimed in at least one of claims 1 to 3, **characterised in that** in step a) the existing socket (4) is separated, preferably cut off, transversely to its longitudinal direction (L) and that in step b) the socket conversion member (8) is positioned on the remaining stump (4') of the socket.

7. A method as claimed in claim 6, **characterised in that** in step c) the metallurgical connection is effected by means of a weld seam (S') in the contact region of the positioned socket conversion member (8) and the socket residue (4'), preferably by means of a peripheral weld seam (S'), which is most preferably applied from the exterior in the side wall region of the socket (4).

8. A method as claimed in at least of one claims 1 to 7, **characterised in that** at least in step a) the liquid container (1) is retained, preferably clamped, on the socket (4) in a process - reliable manner.

9. A socket conversion member (8) for retrofitting a fluid container (1) with a connecting socket (4) preferably a beverage container, most preferably a keg, which socket conversion member (8) is constructed in the manner of an annular member with an internal thread (9), preferably with a pitch of 14 TPI, **characterised in that** the socket conversion member (8) is provided so as to cooperate with a socket residue (4') of the fluid container produced in accordance with the method as claimed in one of claims 1 to 8 so that it is bondable to it.

10. A socket conversion member (8) as claimed in claim 9, **characterised in that** the annular member is so constructed on its outer shell (8a), preferably smoothly cylindrically that it is insertable, in a substantially accurately fitting manner into the enlarged inner contour region (5) of the socket (4) in accordance with claim 4.

11. A socket conversion member 8 as claimed in claim 9, **characterised in that** the annular member is a socket member, which is constructed at one of its end faces such that it is positionable in a substantially accurately fitting manner on the remaining stump (4') as claimed in claim 6 and which has a peripheral outer bead (7), preferably on its other end face.

12. A fluid container (1) with a connecting socket (4), preferably a beverage container, most preferably a keg, **characterised in that** provided in the region of the connecting socket (4) there is a socket conversion member (8), **characterised in that** it is a socket conversion member (8) as claimed in one of claims 9 to 11, which has been bonded with a socket residue (4') on the fluid container (1) produced by the method as claimed in one of claims 1 to 8.

13. A fluid container (1) as claimed in claim 12, **characterised in that** the height (h) measured in the direction of the longitudinal dimension (2) of the socket (4) of the socket conversion member (8) corresponds to a depth (T) of the enlarged inner contour region (5) of the socket (4) as claimed in claim 4.

14. A fluid container (1) as claimed in claim 12, **characterised in that** the height, determined in the direction of the longitudinal dimension (2) of the socket (4), of the socket conversion member corresponds to the length of the socket section removed as claimed in claim 6.

## Revendications

1. Procédé pour rééquiper un récipient de fluide (1) avec un manchon de raccordement (4), de préférence un récipient de boisson, particulièrement de préférence un fût, comprenant les étapes suivantes :
a) enlèvement partiel d'un manchon de raccordement (4) existant sur le récipient de fluide (1), de sorte qu'il subsiste un reste de manchon (4') ;
b) application d'une pièce de conversion de manchon (8) sur le reste de manchon (4') ;
c) assemblage par liaison de matière (S, S') de la pièce de conversion de manchon (8) et du reste de manchon (4').

2. Procédé selon la revendication 1, **caractérisé en ce qu'**à l'étape a), le manchon existant (4) est enlevé partiellement au moyen d'un procédé d'enlèvement de matière.

3. Procédé selon la revendication 1 ou 2, **caractérisé en ce qu'**à l'étape b), une pièce de conversion de manchon (8) avec un filetage intérieur de manchon (9), de préférence avec un pas de 14 TPI, est appliquée sur le reste de manchon (4').

4. Procédé selon au moins une des revendications 1 à 3, **caractérisé en ce qu'**à l'étape a), le manchon existant (4) est élargi dans sa zone de contour intérieur, de préférence alésé ou fraisé, particulièrement de préférence cylindriquement, et qu'à l'étape b), la pièce de conversion de manchon (8) est insérée dans la zone de contour intérieur (5) élargie du manchon (4).

5. Procédé selon la revendication 4, **caractérisé en ce qu'**à l'étape c), l'assemblage par liaison de matière est réalisé au moyen d'une soudure (5) dans la zone de contact de la pièce de conversion de manchon (8) insérée et du reste de manchon (4), de préférence au moyen d'une soudure périphérique (5) qui, de manière particulièrement préférée, est appliquée de l'extérieur dans la zone d'ouverture du manchon (4).

6. Procédé selon au moins une des revendications 1 à 3, **caractérisé en ce qu'**à l'étape a), le manchon existant (4) est sectionné transversalement à son extension longitudinale (L), de préférence coupé, et qu'à l'étape b), la pièce de conversion de manchon (8) est posée sur le moignon restant (4') du manchon.

7. Procédé selon la revendication 6, **caractérisé en ce qu'**à l'étape c), l'assemblage par liaison de matière est réalisé au moyen d'une soudure (S') dans la zone de contact de la pièce de conversion de manchon (8) posée et du reste de manchon (4'), de préférence au moyen d'une soudure périphérique (S') qui, de manière particulièrement préférée, est appliquée de l'extérieur dans la zone de paroi latérale du manchon (4).

8. Procédé selon au moins une des revendications 1 à 7, **caractérisé en ce qu'**au moins à l'étape a), le récipient de fluide (1) est maintenu de manière sûre, de préférence serré, au niveau du manchon (4).

9. Pièce de conversion de manchon (8) pour rééquiper un récipient de fluide (1) avec un manchon de raccordement (4), de préférence un récipient de boisson, particulièrement de préférence un fût, laquelle pièce de conversion de manchon (8) est réalisée à la manière d'une pièce annulaire avec un filetage intérieur (9), de préférence avec un pas de 14 TPI, **caractérisée en ce que** la pièce de conversion de manchon (8) est prévue pour coopérer avec un reste de manchon (4') du récipient de fluide produit d'après le procédé selon une des revendications 1 à 8 de manière à pouvoir être assemblée avec celui-ci par liaison de matière.

10. Pièce de conversion de manchon (8) selon la revendication 9, **caractérisée en ce que** la pièce annulaire est formée sur sa surface d'enveloppe extérieure (8a) de manière, de préférence de manière cylindrique lisse, qu'elle puisse être insérée sensiblement en ajustement précis dans la zone de contour intérieur (5) élargie du manchon (4) selon la revendication 4.

11. Pièce de conversion de manchon (8) selon la revendication 9, **caractérisée en ce que** la pièce annulaire est une pièce femelle qui est formée à une de ses extrémités de manière à pouvoir être posée sensiblement en ajustement précis sur le moignon restant (4') du manchon selon la revendication 6, et qui présente de préférence un bourrelet extérieur périphérique (7) à son autre extrémité.

12. Récipient de fluide (1) avec un manchon de raccordement (4), de préférence récipient de boisson, particulièrement de préférence fût, **caractérisé en ce qu'**une pièce de conversion de manchon (8) est prévue dans la zone du manchon de raccordement (4), **caractérisé en ce qu'**il s'agit d'une pièce de conversion de manchon (8) selon une des revendications 9 à 11, laquelle a été assemblée par liaison de matière avec un reste de manchon (4') du récipient de fluide (1) produit d'après un procédé selon une des revendications 1 à 8.

13. Récipient de fluide (1) selon la revendication 12, **caractérisé en ce que** la hauteur (h) de la pièce de conversion de manchon (8) déterminée dans la direction de l'extension longitudinale (2) du manchon (4) correspond à une profondeur (T) de la zone de contour intérieur (5) élargie du manchon (4) selon la revendication 4.

14. Récipient de fluide (1) selon la revendication 12, **caractérisé en ce que** la hauteur de la pièce de conversion de manchon déterminée dans la direction de l'extension longitudinale (2) du manchon (4) correspond à la longueur de la partie de manchon sectionnée selon la revendication 6.
